# EUROPÄISCHE PATENTSCHRIFT

(11) **EP 4 411 183 B1**
(45) Veröffentlichungstag und Bekanntmachung des Hinweises auf die Patenterteilung: **01.04.2026**
(21) Anmeldenummer: 23154812.4
(22) Anmeldetag: 03.02.2023
(51) Int. Cl.: F16K 3/14, F16K 31/50, F16K 3/314

(54) **SCHIEBEREINHEIT EINER ABSPERRARMATUR**
SLIDE UNIT OF A SHUT-OFF VALVE
UNITÉ COULISSANTE D'UNE VANNE

(43) Veröffentlichungstag der Anmeldung: 07.08.2024
(73) Patentinhaber: Georg Fischer Rohrleitungssysteme AG, 8201 Schaffhausen (CH)
(72) Erfinder: Krauter, Christoph, 78244 Gottmadingen (DE); Andry, Martin, 7551 Ftan (CH); Hunnekuhl, Joerg, 79798 Jestetten (DE); Huessy, Jonas, 8213 Neunkirch (CH); Trefz, Oliver, 79848 Bonndorf (DE)
(74) Vertreter: Fenner, Seraina

(56) Entgegenhaltungen:
- EP-A2- 0 074 088
- EP-B1- 0 123 021
- DE-A1- 3 247 490
- DE-A1- 3 403 562
- GB-A- 1 248 958

## Beschreibung

Die Erfindung betrifft eine Schiebereinheit einer Absperrarmatur vorzugsweise eines Absperrschiebers oder Membranventils beinhaltend, eine vertikal zur Durchströmungsrichtung verlaufende Antriebsspindel zur Betätigung eines Absperrorgans, ein Absperrorgan, wobei das Absperrorgan mittels einer Gewindeverbindung an der Antriebsspindel verstellbar angeordnet ist, ein Federelement zur Aufbringung der benötigten Schliesskraft auf das Absperrorgan und ein an der Antriebsspindel axial fixiertes Stellelement zur Vorspannung des Federelements, sowie das Verfahren.

Derartige Absperrarmaturen werden meist in Leitungen für die Versorgung eingesetzt, die dem Transport von flüssigen oder gasförmigen Medien dienen. Die Schiebereinheit einer solchen Absperrarmatur, vorzugsweise eines Absperrschiebers oder eines Membranventils ist senkrecht zur Rohrleitung bzw. auf deren Mittelachse ausgerichtet und lässt sich auch senkrecht dazu verschieben um die Absperrarmatur zu Öffnen oder zu Schliessen. Die Schiebereinheit weist zur Verschiebung bzw. Betätigung des Absperrorgans von der Offenstellung in die Schliessstellung oder umgekehrt eine Antriebsspindel auf. Zur Betätigung der Schiebereinheit wird entsprechend ein Drehmoment auf die Antriebsspindel aufgebracht, um das Absperrorgan zu betätigen. Abhängig von der an der Armatur aufgetretenen Korrosion und Verschmutzung kann das zu einem entsprechend hohen aufzuwendenden Drehmoment und demzufolge zu mechanischen Beschädigungen führen.

Die GB 1248958 offenbart eine Absperrarmatur, die einen Schnellschliessmechanismus zeigt. Bei normaler Anwendung wird der Keilschieber durch Rotation des Handrads und der Betätigung der Gewindeverbindung zwischen Keilschieber und Spindel in die Schliessposition gebracht. Hierbei können hohe aufzubringende Drehmomente entstehen, falls die Gewindeverbindung sich festgesetzt hat. Zudem weist die Armatur eine Feder auf, die auf den Keilschieber wirkt und die den Keilschieber bei einer Notfallauslösung in die Schliessstellung presst.

Die EP 0 074 088 A2, DE 32 47 490 A1, EP 0 123 021 B1 und DE 34 03 562 A1 offenbaren weitere Möglichkeiten von Schiebeeinheiten und deren Verstellmechanismus.

Es ist Aufgabe der Erfindung eine Vorrichtung und ein damit verbundenes Verfahren vorzuschlagen, dass die auf das Absperrorgan wirkende Schliesskraft in geschlossener Absperrarmaturenposition vom zur Betätigung benötigten Drehmoment entkoppelt ist bzw. bei geschlossener Position sollen keine Reibe- oder Drehmomentkräfte mehr auf die Schiebereinheit wirken.

Diese Aufgabe wird erfindungsgemäss dadurch gelöst, dass die Schiebereinheit eine an der Antriebsspindel angeordnete Tragmutter und ein für die Tragmutter Anschlag bildendes Begrenzungselement zur Festlegung der Schliessposition des Absperrorgans aufweist, wobei die Schiebereinheit zwei an der Antriebsspindel angeordnete Gewindeverbindung aufweist, eine Gewindeverbindung zwischen Absperrorgan und Antriebsspindel und eine Gewindeverbindung zwischen Antriebsspindel und Tragmutter.

Die erfindungsgemässe Schiebereinheit einer Absperrarmatur vorzugsweise eines Absperrschiebers oder Membranventils beinhaltet, eine vertikal zur Durchströmungsrichtung verlaufende Antriebsspindel zur Betätigung eines Absperrorgans. Die Antriebsspindel ist vorzugsweise in einem Armaturengehäuse gelagert, wobei das Armaturengehäuse vorzugsweise aus Kunststoff ist. Die Schiebereinheit beinhaltet ebenso ein Absperrorgan, wobei das Absperrorgan mittels einer Gewindeverbindung an der Antriebsspindel verstellbar angeordnet ist. Das Absperrorgan ist vorzugsweise höhenverstellbar am unteren Ende der Antriebsspindel angeordnet. Das Absperrorgan ist bei einem Absperrschieber vorzugsweise als Absperrkeil und bei einem Membranventil vorzugsweise als Membrane ausgebildet.

Die Schiebereinheit beinhaltet ein Federelement zur Aufbringung der benötigten Schliesskraft auf das Absperrorgan und ein an der Antriebsspindel axial fixiertes Stellelement zur Einstellung bzw. Aufbringen der Vorspannung des Federelements. Das Federelement ist vorzugsweise als Druckfeder ausgebildet und ist vorzugsweise zwischen dem Begrenzungselement und dem Stellelements vorgespannt angeordnet, wobei zur Definition der Länge des Federelements und somit der Federkraft auch eine alternative Auflagefläche anstelle des Begrenzungselements angewendet werden kann.

Die Schiebereinheit weist eine an der Antriebsspindel angeordnete Tragmutter und ein für die Tragmutter Anschlag bildendes Begrenzungselement zur Festlegung der Schliessposition, was der Endposition des Absperrorgans entspricht, auf. Die Schiebereinheit weist zwei an der Antriebsspindel angeordnete Gewindeverbindung auf, eine Gewindeverbindung zwischen Absperrorgan und Antriebsspindel und eine Gewindeverbindung zwischen Antriebsspindel und Tragmutter.

Wird die Schiebereinheit durch das Aufbringen eines Drehmoments betätigt um die Armatur zu schliessen, verschiebt sich die Tragmutter nach unten indem die Antriebsspindel in der längs geführten und nicht mitdrehenden Tragmutter rotiert. Gleich und zeitgleich verhält es sich mit dem Absperrorgan, welches sich ebenfalls vertikal geführt nach unten verschiebt. Die Antriebsspindel rotiert im geführten Absperrorgan und durch die Gewindeverbindung und das nicht mitdrehende Absperrorgan verschiebt sich das Absperrorgan in die Schliessstellung. Kurz bevor die Tragmutter am Begrenzungselement auf Block läuft bzw. dort anliegt hat das Absperrorgan die Schliessstellung erreicht. Dadurch, dass die Tragmutter noch nicht am Begrenzungselement ansteht, kann das Drehmoment noch weiter auf die Antriebsspindel aufgebracht werden, welches auf das Absperrorgan wirkt. Dadurch, dass das Absperrorgan die Endlage bzw. Schliessstellung bereits erreicht hat aber dennoch ein Drehmoment aufgebracht wird, dreht die Antriebsspindel noch leicht weiter, wobei das Absperrorgan feststeht und sich nicht mehr verschiebt. Deshalb verschiebt sich ausschliesslich die Antriebsspindel wieder etwas zurück nach oben bzw. dreht sich über das Gewinde noch etwas weiter heraus. Vorzugsweise liegt dieses Überdrehen in der Grössenordnung von ¼ bis eine Umdrehung. Dementsprechend kann das Federelement auf das Stellelement bzw. die Antriebsspindel einwirken, das axial an der Antriebsspindel fixiert ist. Durch die leichte nach oben Verschiebung der Antriebsspindel wird das Stellelement von einer Auflage am Gehäuse abgehoben. Das Federelement drückt über das Stellelement auf die Antriebsspindel und bringt die Schliesskraft über die Antriebsspindel auf das Absperrorgan. Dadurch wirkt ausschliesslich die Kraft des Federelements auf die Antriebsspindel, da das Drehmoment von der auf Block gelaufenen Tragmutter abgefangen wird und das Absperrorgan ausschliesslich vom Federelement in die Schliessposition gepresst wird. Das Stellelement liegt vorzugsweise bis zur Schliessung des Absperrorgans am Gehäuse auf, wodurch das Federelement noch keine Wirkung auf das Absperrorgan entfaltet. Erst bei der Schliessung und der wie oben beschrieben leichten Überdrehung der Antriebsspindel hebt sich die Stellscheibe von der Auflage am Gehäuse ab, wodurch die Krafteinwirkung des Federelements auf die Antriebsspindel ausgelöst wird.

Es hat sich als vorteilhaft gezeigt, wenn das Begrenzungselement durch eine Auflagefläche gebildet ist die in einer im Gehäuse angeordneten Lagerbüchse angeordnet ist. Alternativ besteht auch die Möglichkeit das Begrenzungselement direkt im Gehäuse anzuordnen.

Eine bevorzugte Ausführungsform besteht darin, dass die vertikal verlaufende Antriebsspindel nicht steigend ausgebildet ist. Dadurch findet keine Veränderung am Äusseren der Armatur statt bzw. die oben aus dem Gehäuse herausragenden Antriebsspindel zur Kopplung mit einem Antrieb, befindet sich immer auf gleicher Höhe.

Es ist vorteilhaft, wenn die Gewindeverbindung zwischen Absperrorgan und Antriebsspindel und die Gewindeverbindung zwischen Antriebsspindel und Tragmutter unterschiedliche Steigungen aufweisen. Dies erlaubt eine kompakte Bauweise, da die Steigung der Gewindeverbindung an der Tragmutter geringer ausfallen kann als beim Absperrorgan. Als vorteilhaft hat sich gezeigt, wenn die Steigungen der Gewindeverbindung in einem Verhältnis von 1:2 bis 1:6 zueinander ausgebildet sind. Das heisst, dass es von Vorteil ist, wenn die Steigung der Gewindeverbindung am Absperrorgan 2- bis 6-mal höher ist als die Steigung bei der Tragmutter. Als besonders bevorzugt hat sich gezeigt, wenn das Verhältnis der Steigungen 1:4 ist.

Als bevorzugte Ausführungsform hat sich gezeigt, wenn die Antriebsspindel mehrteilig ist. Durch die Unterteilung in mehrere Antriebsspindelteilstücke kann die axiale Verschiebung des unteren Antriebsspindelteilstücks, welches das Aussengewinde der Gewindeverbindung zwischen Absperrorgans und Antriebsspindel aufweist, durch das oberhalb angeordnete Antriebsspindelteilstück aufgenommen werden.

Als vorteilhaft hat sich gezeigt, wenn die Antriebsspindel aus mindestens zwei Antriebsspindelteilstücken besteht. Dies erlaubt eine Unterteilung für den oberenund unteren Bereich und unterteilt die Antriebsspindel vorzugsweise nach dem Begrenzungselement bzw. vor dem Federelement. Die Antriebsspindelsteilstücke bzw. die Enden der Antriebsspindelsteilstücke sind vorzugsweise ineinandergreifend verschiebbar miteinander verbunden.

Als bevorzugte Ausgestaltung hat sich gezeigt, wenn die Antriebsspindelteilstücke axial verschiebbar zueinander angeordnet sind. Vorteilhaft ist es, wenn das obere Antriebsspindelteilstück, welches mit dem Gewinde der Tragmutter im Eingriff steht, axial im Gehäuse fixiert ist und das untere Antriebsspindelteilstück, welches mit dem Gewinde des Absperrorgan im Eingriff steht, axial verschiebbar angeordnet ist und die Verschiebung vom oberen Antriebsspindelteilstück aufgenommen wird. Es ist vorteilhaft, wenn dazu das obere Antriebsspindelteilstück am unteren Ende eine Öffnung aufweist in der das obere Ende des unteren Antriebsspindelteilstücks formschlüssig aufgenommen wird um das aufgebrachte Drehmoment zur Schliessung oder Öffnung des Absperrorgans an das untere Teilstück bzw. das Absperrorgan zu übertragen.

Gemäss einer bevorzugten Ausführungsform ist das Antriebsspindelteilstück, das mit einer Gewindeverbindung mit dem Absperrorgan verbunden ist, im Gehäuse axial verschiebbar angeordnet ist.

Als vorteilhaft hat sich gezeigt, wenn die Antriebsspindelteilstücke formschlüssig miteinander verbunden sind. Dies ermöglicht die Drehmomentübertragung auf das Absperrorgan.

Diese Aufgabe wird erfindungsgemäss auch dadurch gelöst, dass das Verfahren zum Schliessen einer Absperrarmatur folgende Schritte aufweist:
- Festziehen der Antriebsspindel durch Aufbringen und Übertragen eines Drehmoments auf das Absperrorgan bis zum Erreichen der Schliessstellung des Absperrorgans,
- leichtes Überdrehen der Schliessstellung bis die Tragmutter auf Block läuft, vorzugsweise am Begrenzungselement, wodurch sich die Antriebsspindel leicht weiter aus dem Absperrorgan hinausdreht und axial nach oben verschiebt,
- durch die auf Block gelaufene Tragmutter wird das Absperrorgan vom Drehmoment entlastet, gleichzeitig wirkt ausschliesslich die Federkraft des Federelements auf das Absperrorgan um die benötigte Schliesskraft aufzubringen.

Alle Ausgestaltungmöglichkeiten sind untereinander frei kombinierbar sowie zur Vermeidung von Wiederholungen sich die Merkmale der Vorrichtung auch automatisch auf das Verfahren und umgekehrt beziehen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Schnittansicht durch eine Absperrarmatur in geöffnetem Zustand,
- Fig. 2: eine Schnittansicht durch eine Absperrarmatur in geschlossenem Zustand,
- Fig. 3: einen vergrösserten Teilschnitt im Lagerbereich im geschlossenem Zustand und
- Fig. 4.: einen vergrösserten Teilschnitt im Lagerbereich in geöffnetem Zustand

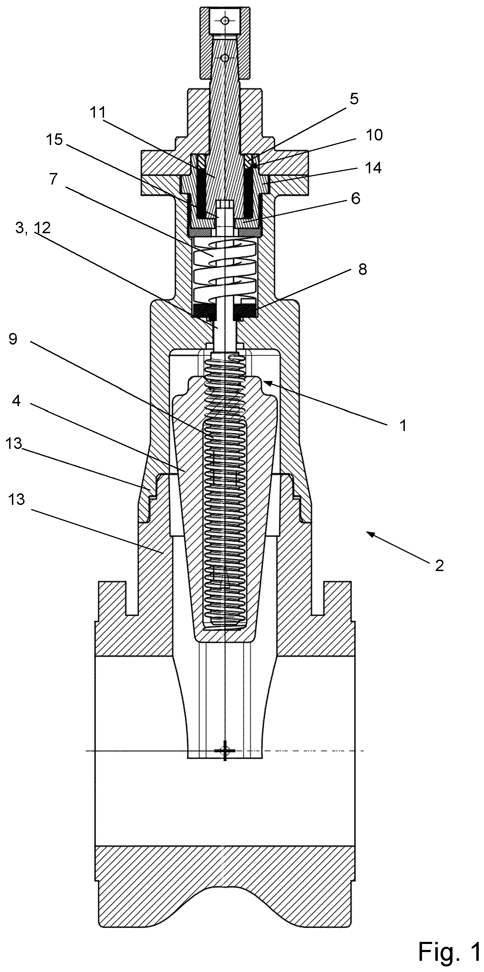

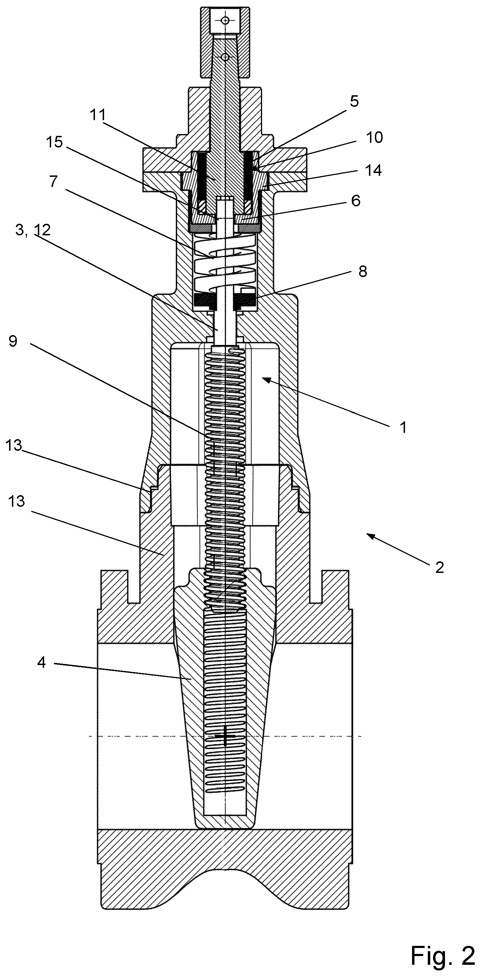

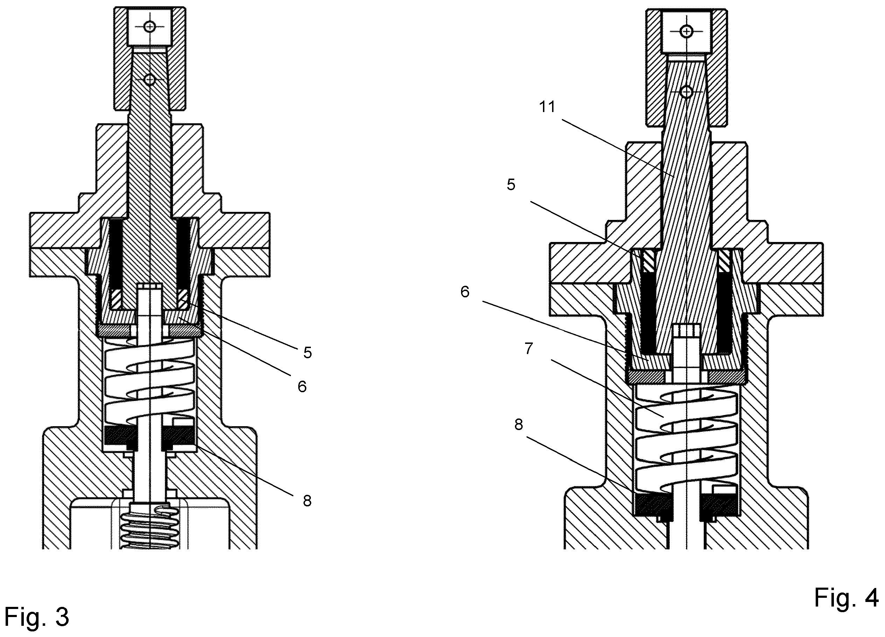

Die in Fig. 1 dargestellte Zeichnung zeigt eine erfindungsgemässe Schiebereinheit 1 in einer Absperrarmatur 2. Wobei in den Figuren als Absperrarmatur 2 ausschliesslich ein Absperrschieber dargestellt ist, die erfindungsgemässe Schiebereinheit 1 aber genauso Anwendung in einem Membranventil finden kann. Die in einem Armaturengehäuse 13 angeordnete Schiebereinheit 1 weist eine vertikal zur Durchströmungsrichtung verlaufende Antriebsspindel 3 auf. Vorzugsweise ist die Antriebsspindel 3 nicht steigend ausgebildet. Am unteren Ende der Antriebsspindel 3 ist ein Absperrorgan 4 angeordnet, wobei das Absperrorgan 3 bei einem Absperrschieber vorzugsweise als Keilschieber, wie dargestellt und bei einem Membranventil als Membrane ausgebildet ist. Das Absperrorgan 4 ist mit einer Gewindeverbindung 9 an der Antriebsspindel 3 höhenverstellbar bzw. verschiebbar angeordnet und lässt sich dadurch nach oben zum Öffnen und nach unten zum Schliessen verschieben indem die Antriebsspindel 3 rotiert. Das Absperrorgan 4 weist ein Innengewinde auf, das mit dem Aussengewinde an der Antriebsspindel 3 im Eingriff steht. Zudem weist die Schiebereinheit 1 ein Federelement 7 auf, welches in geschlossenem Zustand der Schiebereinheit 1 bzw. der Absperrarmatur 2 die Schliesskraft auf das Absperrorgan 4 bringt. Das Federelement 7 wirkt auf das Stellelement 8, welches axial fixiert an der Antriebsspindel 3 angeordnet ist. Im oberen Bereich der Schiebereinheit 1 ist eine Tragmutter 5 angeordnet, diese dient in Zusammenarbeit mit dem Begrenzungselement 6 dazu, den Verfahrensweg der Schiebereinheit 1 bzw. des Absperrorgans 4 zu begrenzen. Durch die Gewindeverbindung 10 zwischen Tragmutter 5 und Antriebsspindel 3 wird beim Aufbringen des Drehmoments die vom Gehäuse 13 bzw. einer im Gehäuse angeordneten Lagerbüchse 14 linear geführte Tragmutter 5 durch die rotierende Antriebsspindel 3 nach unten bewegt bzw. verschoben in Richtung des Begrenzungselements 6. Gleichzeit bewegt sich auch das Absperrorgan 4 aufgrund der rotierenden Antriebsspindel 3 nach unten. Kurz bevor die Tragmutter 5 am Begrenzungselement 6 ansteht bzw. auf Block läuft hat das Absperrorgan 4 die Schliessstellung im Armaturengehäuse 13 erreicht. Dann lässt sich noch eine geringe weitere Zustellung der Antriebsspindel 4 umsetzen, vorzugsweise in der Grössenordnung von einer viertel bis ganzen Umdrehung. Dann ist die Tragmutter 5 auf Block gelaufen was in den Fig. 3 und 3 gut ersichtlich ist. Die erfindungsgemässe Schiebereinheit 1 weist zwei Gewindeverbindungen 9, 10 auf, mit denen sich bei der Betätigung jeweils die Tragmutter 5 und das Absperrorgan 4 längs bzw. vertikal verschieben, zum Schliessen der Armatur 2 nach unten und zum Öffnen nach oben. Das Begrenzungselement 6 ist in den Figuren als Anschlagfläche in einer im Gehäuse 13 angeordneten Lagerbüchse 14 dargestellt. Selbstverständlich kann das Begrenzungselement 6 auch direkt im Gehäuse 13 eingebracht sein oder durch eine andere Ausführungsform fest im Gehäuse 13 angeordnet werden. In den dargestellten Figuren ist das Federelement 7 zwischen dem Stellelement 8 und einer weiteren Scheibe unterhalb Begrenzungselements 6 angeordnet. Selbstverständlich kann diese Scheibe auch weggelassen werden wie sich auch das Federelement 7 anstelle des Begrenzungselements 6 an einer anderen fixierten Auflagefläche abstützen kann um eine Vorspannung zu erreichen. In Fig. 1 und 4 in der geöffneten Stellung, ist ersichtlich, dass das Stellelement 8 noch am Gehäuse 13 nach unten begrenzt ansteht und das Federelement 7 noch keinen Einfluss auf die Antriebsspindel 3 bzw. das Absperrorgan 4 hat. In Fig. 2 und 3 in geschlossener Stellung ist erkennbar, dass das Stellelement 8 nicht mehr am Gehäuse 13 aufliegt und durch die axiale Fixierung des Stelleelements 8 an der Antriebsspindel 3, das Federelement 7 auf das Stellelement 8 wirkt und das wiederum auf die Antriebspindel 3 und das Absperrorgan 4. Zudem ist in Fig. 2 erkennbar, dass die Tragmutter 5 bis auf Block gelaufen ist und am Begrenzungselement 6 anliegt. Als vorteilhaft und auch so in den Figuren dargestellt hat sich gezeigt, wenn die Antriebsspindel 3 mehrteilig ist. Abgebildet ist eine zweiteilige Ausführungsform, wobei die beiden Antriebsspindelteilstücke 11, 12 zueinander verschiebbar angeordnet sind. Das obere Antriebsspindelteilstück 11 ist im Gehäuse 13 axial fixiert gelagert. Das untere Antriebsspindelteilstück 12 ist axial verschiebbar gelagert, damit die wie bereits beschriebene Entkopplung des Drehmoments und Wirkung der Federkraft erfolgen kann und die Antriebspindel 3 vorzugsweise gegen aussen hin nicht steigend ausgebildet ist. Die Antriebsspindelteilstücke 11, 12 sind im Bereich der Antriebsspindelteilstückverbindung 15 miteinander formschlüssig verbunden um das Drehmoment zu übertragen. Die Antriebsspindelteilstücke 11, 12 sind axial zueinander verschiebbar angeordnet. In der abgebildeten Ausführungsform ist dies über eine Öffnung am unteren Ende des oberen Antriebsspindelteilstücks 11 gelöst in die das obere Ende des unteren Antriebsspindelteilstücks 12 hineinragt. Selbstverständlich ist es auch umgekehrt denkbar oder es sind auch andere Lösungen möglich, die eine formschlüssige aber dennoch axial verschiebebare Verbindung zulassen. Alternativ kann dies auch durch ein Kupplungsstück zwischen den Antriebsspindelteilstücken umgesetzt werden.

### Bezugszeichenliste

- 1: Schiebereinheit
- 2: Absperrarmatur
- 3: Antriebsspindel
- 4: Absperrorgan
- 5: Tragmutter
- 6: Begrenzungselement
- 7: Federelement
- 8: Stellelement
- 9: Gewindeverbindung Absperrorgan / Antriebsspindel
- 10: Gewindeverbindung Tragmutter / Antriebsspindel
- 11: Antriebsspindelteilstück im oberen Bereich
- 12: Antriebsspindelteilstück im Bereich Absperrorgan
- 13: Armaturengehäuse
- 14: Lagerbüchse
- 15: Antriebsspindelteilstückverbindung

## Patentansprüche

1. Schiebereinheit (1) einer Absperrarmatur (2) vorzugsweise eines Absperrschiebers oder Membranventils beinhaltend, eine vertikal zur Durchströmungsrichtung verlaufende Antriebsspindel (3) zur Betätigung eines Absperrorgans (4), ein Absperrorgan (4), wobei das Absperrorgan (4) mittels einer Gewindeverbindung (9) an der Antriebsspindel (3) verstellbar angeordnet ist, ein Federelement (7) zur Aufbringung der benötigten Schliesskraft auf das Absperrorgan (4) und ein an der Antriebsspindel (3) axial fixiertes Stellelement (8) zur Vorspannung des Federelements (7), wobei die Schiebereinheit (1) eine an der Antriebsspindel (3) angeordnete Tragmutter (5) und ein für die Tragmutter (5) Anschlag bildendes Begrenzungselement (6) zur Festlegung der Schliessposition des Absperrorgans (4) aufweist, **dadurch gekennzeichnet, dass** die Schiebereinheit (1) zwei an der Antriebsspindel (3) angeordnete Gewindeverbindungen (9, 10) aufweist, eine Gewindeverbindung (9) zwischen Absperrorgan (4) und Antriebsspindel (3) und eine Gewindeverbindung (10) zwischen Antriebsspindel (3) und Tragmutter (5).

2. Schiebereinheit (1) nach Anspruch 1, **dadurch gekennzeichnet, dass** die vertikal verlaufende Antriebsspindel (3) nicht steigend ausgebildet ist.

3. Schiebereinheit (1) nach einem der Ansprüche 1 oder 2, **dadurch gekennzeichnet, dass** die Gewindeverbindung (9) zwischen Absperrorgan (4) und Antriebsspindel (3) und die Gewindeverbindung (10) zwischen Antriebsspindel (3) und Tragmutter (5) unterschiedliche Steigungen aufweisen.

4. Schiebereinheit (1) nach einem der Ansprüche 1 bis 3, **dadurch gekennzeichnet, dass** die Antriebsspindel (3) mehrteilig ist.

5. Schiebereinheit (1) nach einem der Ansprüche 1 bis 4 **dadurch gekennzeichnet, dass** die Antriebsspindelteilstücke (11, 12) zur Drehmomentübertragung formschlüssig miteinander verbunden sind.

6. Schiebereinheit (1) nach einem der Ansprüche 1 bis 5 **dadurch gekennzeichnet, dass** die Antriebsspindelteilstücke (11, 12) axial verschiebbar zueinander angeordnet sind.

7. Schiebereinheit (1) nach einem der Ansprüche 1 bis 6 **dadurch gekennzeichnet, dass** die Steigungen der Gewindeverbindung (9, 10) in einem Verhältnis von 1:2 bis 1:6 zueinander ausgebildet sind.

8. Verfahren zum Schliessen einer Absperrarmatur mit einer Schiebereinheit nach einem der Ansprüche 1 bis 7 mit den folgenden Schritten:
• Festziehen der Antriebsspindel (3) durch Aufbringen und Übertragen eines Drehmoments auf das Absperrorgan (4) bis zum Erreichen einer Schliessstellung des Absperrorgans (4),
• leichtes Überdrehen der Schliessstellung bis die Tragmutter (5) auf Block läuft, wodurch sich die Antriebsspindel (3) leicht weiter aus dem Absperrorgan (4) hinausdreht und axial nach oben verschiebt,
• durch die auf Block gelaufene Tragmutter (5) wird das Absperrorgan (4) vom Drehmoment entlastet, gleichzeitig wirkt ausschliesslich eine Federkraft des Federelements (7) auf das Absperrorgan (4) um eine benötigte Schliesskraft aufzubringen.

## Claims

1. Valve unit (1) of a shut-off valve (2), preferably of a gate valve or diaphragm valve, comprising an actuator stem (3) extending vertically with respect to the throughflow direction for activating a shut-off device (4), a shut-off device (4), wherein the shut-off device (4) is adjustably arranged on the actuator stem (3) by means of a threaded connection (9), a spring element (7) for applying the required closing force to the shut-off device (4) and a control element (8), axially secured on the actuator stem (3), for pretensioning the spring element (7), wherein the valve unit (1) has a support nut (5) arranged on the actuator stem (3) and a delimiting element (6) forming a stop for the support nut (5) in order to define the closed position of the shut-off device (4), **characterized in that** the valve unit (1) has two threaded connections (9, 10) arranged on the actuator stem (3), a threaded connection (9) between the shut-off device (4) and the actuator stem (3) and a threaded connection (10) between the actuator stem (3) and the support nut (5).

2. Valve unit (1) according to Claim 1, **characterized in that** the vertically extending actuator stem (3) is of non-rising design.

3. Valve unit (1) according to one of Claims 1 or 2, **characterized in that** the threaded connection (9) between the shut-off device (4) and the actuator stem (3) and the threaded connection (10) between the actuator stem (3) and the support nut (5) have different pitches.

4. Valve unit (1) according to one of Claims 1 to 3, **characterized in that** the actuator stem (3) consists of multiple parts.

5. Valve unit (1) according to one of Claims 1 to 4, **characterized in that** the actuator stem sections (11, 12) are connected to one another with form fit for transmitting a torque.

6. Valve unit (1) according to one of Claims 1 to 5, **characterized in that** the actuator stem sections (11, 12) are arranged so as to be axially displaceable with respect to one another.

7. Valve unit (1) according to one of Claims 1 to 6, **characterized in that** the pitches of the threaded connection (9, 10) are designed in a ratio to one another of 1:2 to 1:6.

8. Method for closing a shut-off valve with a valve unit according to one of Claims 1 to 7, having the following steps:
• tightening the actuator stem (3) by applying and transmitting a torque to the shut-off device (4) until a closed position of the shut-off device (4) is reached,
• continuing the rotation slightly beyond the closed position until the support nut (5) comes to a stop, whereby the actuator stem (3) rotates slightly further out of the shut-off device (4) and is displaced axially upwards,
• the shut-off device (4) is relieved of torque as a result of the support nut (5) which has come to a stop, whilst a spring force of the spring element (7) alone acts on the shut-off device (4) in order to apply a required closing force.

## Revendications

1. Unité coulissante (1) d'une robinetterie d'arrêt (2), de préférence d'un coulisseau d'arrêt ou d'une soupape à membrane, contenant une broche d'entraînement (3) s'étendant verticalement par rapport à la direction d'écoulement pour actionner un organe d'arrêt (4), un organe d'arrêt (4), l'organe d'arrêt (4) étant agencé de manière réglable sur la broche d'entraînement (3) au moyen d'une liaison filetée (9), un élément à ressort (7) pour appliquer la force de fermeture nécessaire sur l'organe d'arrêt (4) et un élément de réglage (8) fixé axialement à la broche d'entraînement (3) pour précontraindre l'élément à ressort (7), l'unité coulissante (1) présentant un écrou porteur (5) agencé sur la broche d'entraînement (3) et un élément de limitation (6) formant butée pour l'écrou porteur (5), pour fixer la position de fermeture de l'organe d'arrêt (4), **caractérisée en ce que** l'unité coulissante (1) présente deux liaisons filetées (9, 10) agencées sur la broche d'entraînement (3), une liaison filetée (9) entre l'organe d'arrêt (4) et la broche d'entraînement (3) et une liaison filetée (10) entre la broche d'entraînement (3) et l'écrou porteur (5).

2. Unité coulissante (1) selon la revendication 1, **caractérisée en ce que** la broche d'entraînement (3) s'étendant verticalement n'est pas réalisée sous forme ascendante.

3. Unité coulissante (1) selon l'une quelconque des revendications 1 ou 2, **caractérisée en ce que** la liaison filetée (9) entre l'organe d'arrêt (4) et la broche d'entraînement (3) et la liaison filetée (10) entre la broche d'entraînement (3) et l'écrou porteur (5) présentent des pas différents.

4. Unité coulissante (1) selon l'une quelconque des revendications 1 à 3, **caractérisée en ce que** la broche d'entraînement (3) est à plusieurs parties.

5. Unité coulissante (1) selon l'une quelconque des revendications 1 à 4, **caractérisée en ce que** les pièces partielles de broche d'entraînement (11, 12) sont reliées entre elles par complémentarité de forme pour la transmission du couple.

6. Unité coulissante (1) selon l'une quelconque des revendications 1 à 5, **caractérisée en ce que** les pièces partielles de broche d'entraînement (11, 12) sont agencées de manière à pouvoir coulisser axialement les unes par rapport aux autres.

7. Unité coulissante (1) selon l'une quelconque des revendications 1 à 6, **caractérisée en ce que** les pas de la liaison filetée (9, 10) sont réalisés dans un rapport de 1:2 à 1:6 les uns par rapport aux autres.

8. Procédé pour fermer une robinetterie d'arrêt avec une unité coulissante selon l'une quelconque des revendications 1 à 7, comprenant les étapes suivantes :
• le serrage de la broche d'entraînement (3) par application et transmission d'un couple à l'organe d'arrêt (4) jusqu'à ce que l'organe d'arrêt (4) atteigne une position de fermeture,
• une légère sur-rotation de la position de fermeture jusqu'à ce que l'écrou porteur (5) vienne en butée, moyennant quoi la broche d'entraînement (3) est légèrement davantage dévissée hors de l'organe de fermeture (4) et déplacée axialement vers le haut,
• du fait que l'écrou porteur (5) est venu en butée, l'organe de fermeture (4) est déchargé du couple, tandis que, simultanément, seule une force de ressort de l'élément de ressort (7) agit sur l'organe d'arrêt (4) afin d'appliquer une force de fermeture requise.
